# EUROPEAN PATENT APPLICATION

(11) **EP 1 098 213 A1**
(43) Date of publication of application: **09.05.2001**
(21) Application number: 99402722.5
(22) Date of filing: 02.11.1999
(51) Int. Cl.: G02B 6/36

(54) **Method of making pigtail arrays**

(71) Applicant: CORNING INCORPORATED, Corning, N.Y. 14831 (US)
(72) Inventor: Brun, Marc G., Corning Inc. Patent Dept., Corning, NY 14831 (US)
(74) Representative: Grunfeld, David Peter

(57) **Abstract**

An optical signal transmission system including a pair of blocks having a multiplicity of recesses which when the blocks are combined together define a plurality of cavities, and a multiplicity of optical waveguides.

## Description

### 1. Field of the Invention

The present invention relates generally to optical waveguide connectors, and more particularly to a connector of an array of optical waveguides.

### 2 . Technical Background

Optical waveguide arrays, may generally be described as the gathering and positioning of the ends of multiple optical fibers into a specific pattern. Optical waveguide arrays may serve as input terminals, output terminals and interstage couplers for optical communication systems. Precision fiber optic arrays are important components of such systems. The alignment of arrays of optical waveguides to one another is a challenging endeavor that has engendered many diverse approaches. Of particular interest in is the combining multiple optical waveguides in the form of optical fibers into arrays in order to reduce the number of separate connectors required and to simplify the connection process. Most current approaches to the design of optical waveguide arrays focus on the use of V-grooves for aligning the optical fibers. In particular these approaches use the sides of the V-grooves as the primary vehicle for the horizontal and vertical positioning of the optical fibers.

Presently a number of different approaches have been proposed to provide the required precision required for forming arrays of optical waveguides. Exemplary of these proposed approaches are machining, etching and molding V-grooves into a substrate.

One proposed approach involves the machining of grooves into a substrate block, and then cutting the substrate block into a number of smaller grooved blocks. Typically this process is used to machine V-grooves into the substrate blocks. Currently the standard pitch for grooves obtained by machining is 250 µm. Standard optical fibers presently in use are on the order of 125 µm in diameter, therefore, machined grooves do not allow for the smallest packaging possible. A number of obstacles to obtaining the precision required in optical connections are inherent in this machining process. The machining of the grooves and the subsequent cutting of the substrate into smaller units may lead to warpage of the substrate block. Another inherent obstacle is the nature of the machining process itself; any machining process involves the removal of material not only from the object being machined, but also from the cutters removing the material. This erosion of the cutting tools results in a loss of precision in both the width and depth of the machined grooves. The accuracy obtainable using this machining approach is highly dependent upon the depth and pitch control of the cutting machine, as well as the wear characteristics of the cutters used. Additionally, as the number of V-grooves increases the precision with which each groove may be located decreases. This decrease in groove location accuracy is due to the fact that each groove is typically cut individually. Therefore, the positioning tolerances and resolution of the cutting machine come into play. The effect of positioning tolerance and measurement resolution is cumulative, increasing in direct proportion to the number of separate positions the cutting machine must be set up in.

Chemical etching of silicon is another proposed approach. Chemical etching, also referred to as wet etching, is typically done using silicon wafers in clean rooms. This process involves partially masking a silicon wafer with a desired pattern and then exposing the masked silicon wafer to a reactive chemical that removes material from the wafer in areas not protected by the mask. The chemical etching of silicone wafers results in V-grooves due to the crystalline structure of the silicon. Photolithography is typically used to lay out the mask pattern and is capable of producing patterns with very high V-groove densities. Unlike the machining approach, the precision of the location if the V-grooves does not depend on the number of V-grooves being etched, but rather on the precision of the masking. After the etching process, the wafer is sectioned into blocks for use in making optical fiber arrays. Sectioning of the wafers into blocks requires the use of precision machine tools, and close tolerance cutters. The operational steps of the etching, sectioning and assembly require the design of specialized assembly equipment. In order to be cost effective, the high cost associated with specialized machinery necessitates this approach can only be used for high volume production.

Another proposed approach involves the embossing of grooves in a glass material.

### SUMMARY OF THE INVENTION

One aspect of the present invention relates to an optical waveguide alignment device for use with a plurality of optical waveguide fibers. Each fiber has a bare portion and a covered portion. The fibers are configured to transmit an optical signal. The optical waveguide alignment device includes a substrate having a substantially planar surface. The substantially planar surface is a grooved surface having a plurality of grooves. Each groove has a substantially rectangular shape and a portion of lesser dimension than the diameter of the bared portion of one of the optical waveguide fibers. Each of these portions is configured to support one of the optical waveguide fibers in a predetermined position.

In another aspect, the invention includes an optical waveguide alignment device for use with a plurality of optical waveguide fibers, each fiber having a bare portion and a covered portion. The fibers are configured to transmit an optical signal. The optical waveguide alignment device includes a substrate having a substantially planar surface where the planar surface has a number of grooves. These grooves vary in width. Each groove has a substantially rectangular shape. These grooves have a first narrow portion and a second narrow portion with an intermediate portion disposed therebetween. The first and the second narrow portion are lesser in width than the diameter of the bared portions of one of the optical waveguide fibers that is to be positioned.

In another aspect, the invention includes a connector for optical signal transmission systems for use with a plurality of optical waveguide fibers. Each fiber includes a bare portion and a covered portion, and is configured to transmit an optical signal therethrough. The bare portion has a terminal end configured for emitting or receiving light. The connector for optical signal transmission systems includes an alignment base plate having a connection face, and a grooved surface adjacent to the connection face and forming an angle with the connection face. The grooved surface includes a plurality of coplanar grooves. Each groove including a proximate portion adjacent to the connecting face having a substantially rectangular cross section lesser in width than the diameter of the bare portion of the optical fiber, a distal portion having a substantially rectangular cross section lesser in width than the diameter of the bare portion of the optical fiber, and an intermediate portion having a substantially rectangular cross section therebetween. The intermediate portion havs a width greater than the widths of the proximate and distal portions. An alignment top plate is attached to the alignment base plate , the alignment top plate has a connection face and a grooved surface adjacent to the connection face which forms an angle with the connection face. The grooved surface including a plurality of coplanar grooves. Each groove including a proximate portion adjacent to the connecting face having a substantially rectangular cross section lesser in width than the diameter of the bare portion of the optical fiber, a distal portion having a substantially rectangular cross section lesser in width than the diameter of the bare portion of the optical fiber, and an intermediate portion having a substantially rectangular cross section therebetween. The intermediate portion has a width greater than the widths of the proximate and the distal portions. In this embodiment, the alignment base plate and the alignment top plate support and restrain each of the plurality of optical waveguide fibers in a predetermined position, and the connection face of the alignment base plate and the connection face of the alignment top plate are positioned to form a substantially planar surface. The substantially planar surface is configured to facilitate use of the optical fibers as providers of input signals to or receivers of output signals from an optical device.

In another aspect of the invention, the invention includes a method for manufacturing optical waveguide alignment devices. This method includes the steps of: forming a body having a planar surface, forming a number of grooves in the planar surface, severing the body to form at least two grooved supports, inserting a number of optical waveguides into the waveguide fibers into the grooves of the first groove support, and placing the second grooved support on the first grooved support, thereby aligning the optical waveguides with the grooves in the first and second supports. The first grooved support is attached to the second grooved support and the optical waveguides to form an optical waveguide block. A portion is removed from the optical waveguide block, where the removal takes place along a plane transverse to the plurality of optical waveguides and produces at least one surface. The ends of the optical waveguide fibers terminate and are coplanar with this surface and this surface is suitable for use as an optical connection surface.

In another aspect, the invention relates to a method for manufacturing optical waveguide alignment devices for an optical signal transmission system, including the steps of: forming a silica substrate block depositing a silicon masking layer on the substrate block, depositing a resin masking layer, curing the resin masking layer, etching the masking layer, etching the substrate block, removing the silicon mask, placing a protective coating on the etched silica substrate block, severing the etched silica substrate block into a number of fiber guide blocks, removing the coating, selecting two complimentary fiber guide blocks, sandwiching a plurality of optical fibers between the selected guide blocks, inserting an adhesive to attach the guide blocks to each other and the optical waveguide fibers, and polishing a face of the guide block to serve as an optical interface.

In another aspect of the invention, the invention includes a method for manufacturing optical waveguide alignment devices. This method includes the steps of: forming a body having a planar surface, forming a number of grooves in the planar surface, and severing the body to form at least two grooved supports. A number of optical waveguide are then inserted into the grooves of the first grooved support. The second grooved support is placed on the first grooved support, aligning the optical waveguides with the grooves of the first and second supports. The first grooved support is attached to the second grooved support and the optical waveguides to form an optical waveguide block. A portion is removed from the optical waveguide block, where the removal takes place along a plane transverse to the plurality of optical waveguides and produces at least one surface. The ends of the optical waveguide fibers terminate and are coplanar with this surface and this surface is suitable for use as an optical connection surface.

In another aspect, the invention relates to a method for manufacturing optical waveguide alignment devices for an optical signal transmission system, including the steps of: forming a silica substrate block, depositing a silicon masking layer on the substrate block, depositing a resin masking layer, curing the resin masking layer, etching the masking layer, etching the substrate block, removing the silicon mask, placing a protective coating on the etched silica substrate block, severing the etched silica substrate block into a number of fiber guide blocks, removing the coating, selecting two complimentary fiber guide blocks, sandwiching a plurality of optical fibers between selective guide blocks, inserting an adhesive to attach the guide blocks to each other and the fibers, and polishing a base of the guide block to serve as an optical interface.

The optical alignment device of the present invention results in a number of advantages over the prior art. For example, the use of photolithography allows the precise layout of the grooves. The precision layout increases the number of waveguides that may be positioned by a single optical alignment device. This increase in the number of waveguides is due to the dramatic decrease in positioning error when compared to other proposed methods of manufacture.

Another example, the advantages conferred by the present invention over the prior art is the use of rectangular shaped grooves for the containment and alignment of the optical fibers in a predetermined pattern. The use of rectangular shaped grooves allows for increased precision in the positioning of the optical fibers. This is accomplished by utilizing the edges of the grooves as contact points rather than the flats of the sides or bottom of the grooves as done in other proposed methods.

Still another advantage of an embodiment of the present invention over the prior art is that only one alignment plate is necessary when configured with the rectangular shaped grooves. This is because the rectangular shaped grooves allow the precise alignment in a vertical dimension from a planar surface of the optical fiber ends sought to be coupled to an optical device. This advantage is further illustrated in that no cover plate is required, thereby removing an assembly step and an extra part from the assembly. Another example of an advantage of an embodiment of the present invention is the contact points for the bare portion of fiber are line contacts along the edges of the "U" shaped grooves, rather than the flats of the "V" grooves used in the prior art. The lines of contact minimizes the contact area of the bare portion of the optical fiber with the grooves, while providing for the precise alignment and positioning of the fibers. This allows the fibers to be almost completely surrounded by an optical adhesive. The bare portion of the fiber is, therefore, imbedded in a medium that is primarily uniform with only the slight disruptions of the lined contacts rather than the contacting along the flats of the "V" grooves of the prior art.

Another advantage of an embodiment of the present invention over the prior art is the use of grooves of varying width. The variation in the width of the grooves allow both the alignment of the bare portion of the fiber from which signals will be transmitted and received and of the covered portion of the fiber. The support of the cover portion of the fiber allows a more robust design of the optical alignment device when it is used in an optical connection capacity.

Yet another advantage of an embodiment of the present invention over the prior art is the use of reactive ion etching, which allows the substrate material of the optical alignment device component blocks to be manufactured from either silica or silicon. In using silica, another advantage of the invention becomes evident in that silica is a media that is transparent to ultra-violet radiation. Therefore, an ultra-violet curable adhesive may be used. The use of the ultra-violet adhesive does away with the necessity of the thermally curing the adhesive.

### BRIEF DESCRIPTION OF DRAWINGS

Figure 1 is a perspective view of the optical fiber alignment device in which the present invention is embodied.

Figure 2 is a front plan view of the optical fiber alignment device shown in Fig. 1.

Figure 3 is an enlarged fragmentary detail view of the portion of the optical fiber alignment device within the cited circle "AA" of Fig. 2.

Figure 4 is a perspective view of an alternative embodiment of the optical fiber alignment device in which the present invention is embodied.

Figure 5 is a side elevation view of the optical fiber alignment device as shown in fig. 4.

Figure 6 is a flow chart showing the fabrication process steps of the present invention in block diagram form.

### DETAILED DESCRIPTION OF THE PREFERRED EMBODIMENTS

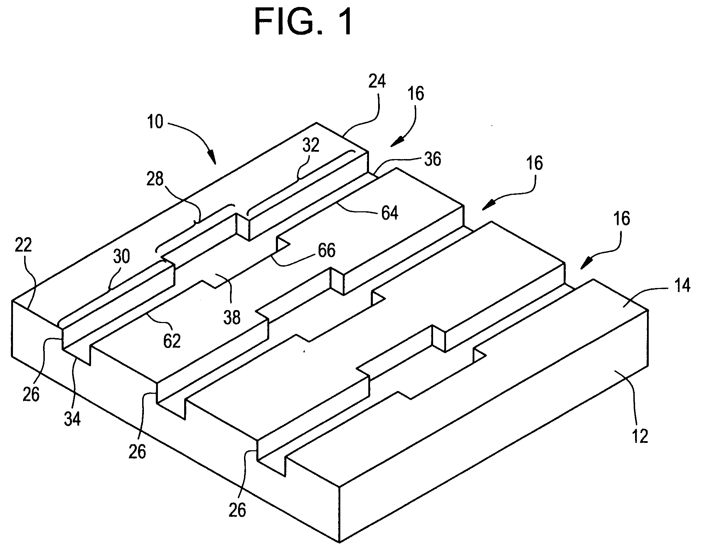

Reference will now be made in detail to the present preferred embodiments of the invention, examples of which are illustrated in the accompanying drawings. Whenever possible, the same reference numbers will be used throughout the drawings to refer to the same or like parts. An exemplary body of the optical fiber alignment block of the present invention is shown in Fig. 1 and is designated generally throughout by reference numeral 10.

In accordance with the invention, the present invention for an optical waveguide alignment device 10 includes a substrate 12. The substrate 12 should have similar mechanical and thermal properties to the material to which the optical alignment device 10 will be connected. Exemplary of such items that the optical alignment device 10 may be connected to are optical cross connect switches, optical pigtails, lightwave optical circuits, planar devices, other optical alignment devices, and any other device that it is desired to make a connection of a plurality of optical fibers held in precise positions to. Exemplary of the materials from which the substrate 12 may be made are silica and silicon.

The substrate 12 includes a grooved surface 14 that contains a plurality of grooves 16. The grooves 16 are formed in the substrate 12 by the use of photolithography and an etching process. Exemplary of this is the use of a reactive ion etching process with a silica or silicon substrate. Each of the grooves 16 has a first end portion 30 and a second end portion 32 separated by an intermediate portion 28. The grooves 16 are to and position the bare portion 42 of optical fibers 40. The bare portion 42 of the optical fiber 40 is contacted along its circumference by the edges 62 of the first end portion 30 and the edges 64 of the second end portion 32 of the groove 16. The edges 66 of the intermediate portion 28 of the groove 16 do not contact the bare portion 42 of the fiber 40. Each of the grooves 16 has a depth 26 which is determined by the amount of time in which the reactive ion etching process is used. The depth 26 of the groove 16 is dependent upon the lesser of the width 34 of the first end portion 30 and the width 36 of the second end portion 32 of the groove 16. The depth 26 of the groove 16 is chosen so that when the bare portion 42 of an optical fiber 42 contacts the edges 62, 64 of the first and second end portions 30, 32 of the groove 16 a space 68 exists between the bare portion 42 of the optical fiber 42 and the floor of the groove 27.

The width 34 of the first end portion 20 of the groove 16 is chosen such that it is less than the diameter of the bare portion 42 of the optical fiber 40 to be positioned by the optical waveguide alignment device 10. The width 38 of the intermediate portion 28 is chosen to allow the free flowing of adhesive in a later assembly step. The width 38 of the intermediate portion 28 is greater than the width 34 of the first end portion 30 and the width 36 of the second end portion 32 of the groove 16 so that the edges 66 of the intermediate portion 28 do not come into contact with the bare portion 42 of the optical fiber 40.

It will be apparent to those of ordinary skill in the pertinent art that modifications and variations may be made to the optical waveguide alignment device 10 of the present invention depending upon the diameter and overall dimensions of the optical fibers 40 that are to be aligned; and the position that the optical axis 52 of the fibers 40 are to be positioned at. Other modifications should be apparent to those of ordinary skill in the art would be minor changes in the rectangular shape of the groove to some other shape still providing the lines of contact formed by the edges 62 and 64 of the first 30 and second 32 end portions of the groove 16 to the bare 42 portion of the optical fiber 40.

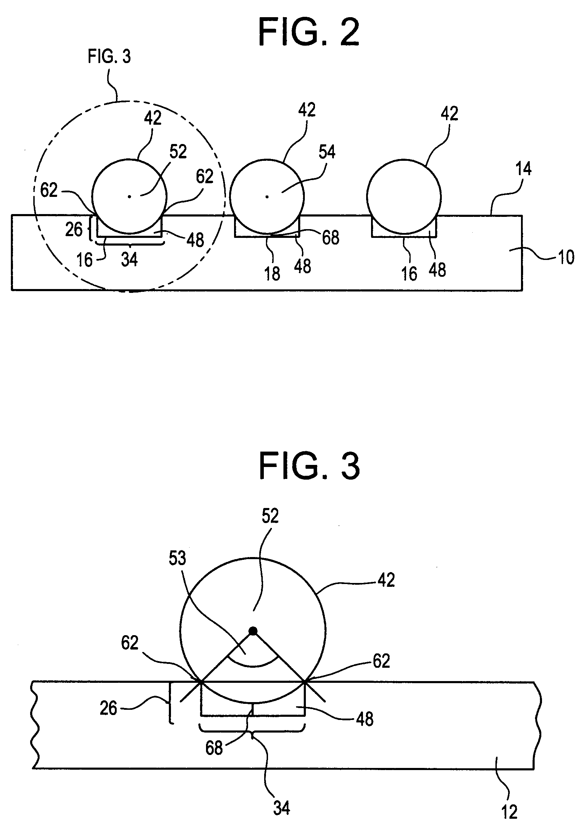

Fig. 2 more clearly illustrates the relationship between the width 34 of the groove 16 and the depth 26 of the groove 16 and the bare portion 42 of the optical fiber 40. The edges of the groove 62 of the first end portion 30 contact the circumference of the bare portion 42 of the optical fiber 40. The width 34 of the first end portion 30 is chosen so that a gap 68 results between the bottom of the groove 18 and the bare portion 42 of the fiber 40. This sizing allows the formation of an adhesive cavity 48.

Fig. 3 illustrates the relationship of the edges of the end portion 30, 32 of the grooves 16 to the diameter of the bare portion 42 of the optical fiber 40. The width 34 of the groove 16 is chosen such that the arc subtended 53 by the lines of contact with the bare portion of the fiber 42 and the edges of the groove 62 is approximately 90º; the vertical positioning of the optical axis 52 of the fiber 40 may be adjusted by changing the width 34 of the first end portion 30 of the groove 16. Thus allowing each optical fiber 40 to have a unique vertical position. In a preferred embodiment the widths 34, 36 of the narrow portions 30, 32 of the groove 16 are approximately equal. The use of equal width grooves allows for the simplified linear alignment of the optical alignment block 10 when it is used as an optical connector.

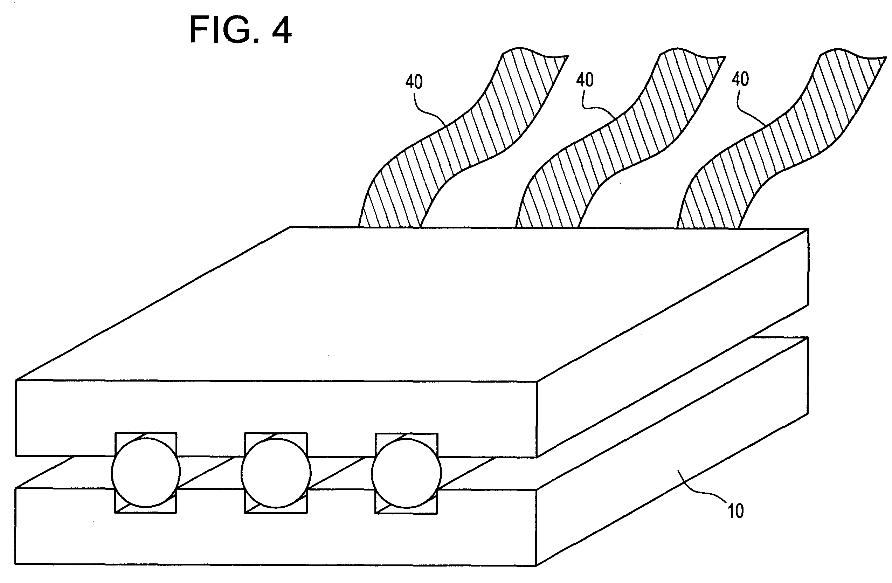

In another alternative embodiment of the invention, as embodied herein and as shown in Fig. 4, an alignment block 10 supports a number of optical fibers 40 in predetermined positions. A second alignment block 10 is placed on top of the first alignment block 10 and the optical fibers 40 capturing the bare portions 42 of the optical fibers 40 in a series of grooves 16 wherein the grooves in the first and second alignment blocks compliment one another to secure the optical fibers 40 into a predetermined location and defined adhesive cavities 48 that are filled by an adhesive. Exemplary of this filling by an adhesive of the adhesive cavity 48 is the use of capillary action or the complete filling of the grooves 16 with an adhesive the positioning of the optical fibers in the groove 16 of a first optical alignment block 10 coating the fibers with an adhesive sufficient to fill the groove 16 of a second optical alignment block 10 and then placing the second optical alignment block 10 on top of the adhesive optical fiber 40 and alignment base 10 thereby forming an optical connector. This connector assembly 56 has a connector surface 58. The connector surface 58 has a connector face angle 60 defined as the angle between the optical axis 52 of the fibers 40 and the connector surface 58. Exemplary of this in a preferred embodiment, the connection face undergoes precision polishing to provide a planar surface inclined at an angle of 8-12º with the optical axis of the fibers 52. The optical connector assembly 56 and similar embodiments are preferably made by filling the adhesive cavity 48 by capillary action. The filling of the adhesive cavity 48 by capillary action is a preferred method as it reduces the number of voids that may surround the fibers. The viscosity of the adhesive used to fill the adhesive cavity 48 by capillary action must be such to allow the adhesive to flow by capillary action throughout the grooves 16 in the adhesive cavity 48. After the adhesive is inserted by capillary action into the adhesive cavity 48, the connector assembly is placed into a vacuum chamber for degassing. The degassing serves to remove any air pockets or bubbles from the adhesive in the adhesive cavity 48 formed by the grooves 16 surrounding the bare portion 42 of the fiber 40. It is of particular importance that the bare portions 42 of the optical fibers 40 are embedded in a uniform media without defects. It is important that a uniform media surround the bare portions 42 of the optical fibers 40 so that when light is passed through the fibers no hot spots exist around the fiber therefore preventing localized burning of the adhesive.

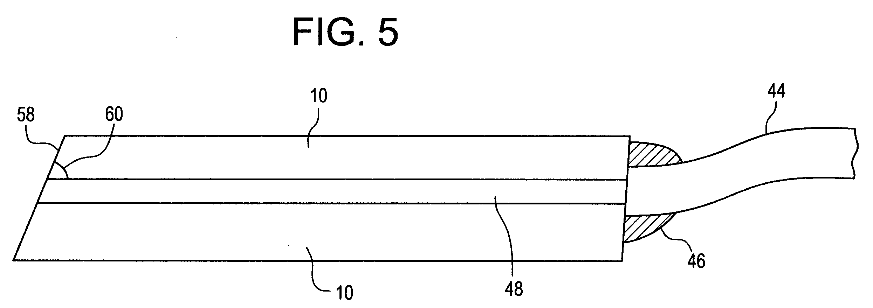

Fig. 5 is a side elevation view of the connector assembly 56 as illustrated in an embodiment shown in Fig. 4. The connector face angle 60 is clearly shown. It is important to note that in a preferred embodiment the connector face angle 60 occurs only in one plane. That is to say the plane formed by the connector face 58 after polishing is angled only in one dimension and that dimension is transverse to the optical axis 52 of at least two (2) of the fibers 40. In a preferred embodiment, each optical fiber 40 has a covered portion 44 abutting the connector assembly 56. An adhesive collar 46 surrounds the region of the covered portion 44 of the optical fiber 40 adjacent to the connector assembly 56. The adhesive collar 46 serves as a strain relief mechanism for the protection of the optical fibers 40.

In an alternate embodiment of the invention as embodied herein and as shown in Fig. 6 a method of manufacturing of optical alignment devices shown in Fig. 1 to 5. The first step in the method is depositing a silicon mask on a silica wafer. The silica wafer must have at least one substantially flat or planar surface on which the silicon mask is deposited. The next step of the process is to use photolithography to lay out the locations and dimensions of the grooves that are to be etched into the silica wafer by reactive ion etching. The steps of the photolithography masking process include the deposition of a resin on top of the silicon masking layer and thermally curing this resin. Exemplary of the resins that may be used for this purpose are after the resin has been cured by means well known to those in the art, the mask is radiated by ultra-violet light. The ultra-violet irradiation forms regions of the mask material or resin that are removed from the silicon masking layer. After the removal of the proper portions of the resin masking layer, the silicon mask layer undergoes etching. After the silicon masking layer has been etched, the silica substrate block is etched providing the proper groove pattern. This etching is to a predetermined depth. Exemplary on the order of the etching is accomplished by the reactive ion etching process well known to those skilled in the art and exemplified by US Patent No. 5,281,303 to Beguin et al. This process may be used on either a silica or silicon substrate material when the method is used on a silicon substrate, the masking material is silica. After the etching of the substrate block is completed, the silicon masking material is removed. After the removal of the silicon masking material, a protective layer or coating is placed on the etched surface of the silica substrate. This coating is a resin that is then cured. Exemplary of curing mechanisms are exposure to elevated temperatures for thermal curing adhesives and irradiation by ultra violet (UV) light for UV-curable adhesives. The silica substrate block is then severed into a number of fiber guide blocks. The protective coating that was applied to protect the grooves and the substrate block during the handling and cutting operation is then removed. Exemplary of a preferred embodiment optical connector is illustrated in Fig. 4. Two (2) complimentary fiber blocks are selected, and are used to sandwich a number of optical fibers having bare portions and covered portions. Adhesive is then flowed around the fibers, using capillary action, attaching the blocks and the fibers to each other forming a basic optical coupling device. The face containing the ends of the bare fibers is then inclined at an angle with respect to the optical axis of the fibers and this optical connection face is then polished to provide an optical interface plane.

It will be apparent to those of ordinary skill in the pertinent art that modifications and variations can be made to the materials used for both the masking layer and the substrate layer of the present invention depending on what properties are desired for end products of the process. Exemplary of this is the matching of the coefficient of thermal expansion of the substrate blocks from which the optical coupling devices are manufactured to the coefficient of thermal expansion of the optical device to which the coupler is to be attached. Exemplary of materials that may be chosen are silica and silicon for the substrate wafers. Different masking materials are used for the different substrate materials; exemplary of this are the use of silicon as a masking material for a silica substrate and the use of silica as a masking layer for the silicon substrate. In the case where silicon is used to mask a silica substrate, the masking layer of silicon is approximately two microns thick.

It will be apparent to those skilled in the art the various modifications and variations can be made to the present invention without departing from the spirit or scope of the invention. Thus, it is intended that the present invention cover the modifications and variations of this invention provided they come within the scope of the appended claims and their equivalents.

## Claims

1. An optical waveguide alignment device for use with a plurality of optical waveguide fibers comprising:
a substrate, having a substantially planar surface, wherein said substantially planar surfaces is a grooved surface, having a plurality of grooves, each having a substantially rectangular shape and a portion of lesser width than the diameter of said bared portion of one of said plurality of optical waveguide fibers, configured to support one of said plurality of optical waveguide fibers in a predetermined position.

2. The optical waveguide alignment device of claim 1, wherein each one of said grooves comprises:
a first narrow portion;
a second narrow portion; and
a intermediate portion disposed therebetween,
wherein said first narrow portion is lesser in width than the diameter of said bared portion of one of said plurality of optical waveguide fibers, said second narrow portion is lesser in width than the diameter of said bared portion of one of said optical waveguide fibers, and said intermediate portion is greater in width than said first narrow portion and said second narrow portion.

3. The optical waveguide alignment device of claim 2, wherein said substrate is made from silica.

4. The optical waveguide alignment device of claim 2, wherein said substrate is made from silicon.

5. The optical waveguide alignment device of claim 2, wherein said plurality of grooves is made using photolithography and reactive ion etching.

6. For use with a plurality of optical waveguide fibers, each fiber including a bare portion and a covered portion, configured to transmit an optical signal therethrough, said bare portion having an terminal end configured for emitting or receiving light, an optical waveguide alignment device, comprising:
an alignment base plate, having a substantially planar surface, wherein said substantially planar surfaces is a grooved surface having a first groove, with a substantially rectangular shape, said first groove having a portion of lesser dimension than the diameter of said bared portion of one of said plurality of optical waveguide fibers, said groove configured to support one of said plurality of optical waveguide fibers in a predetermined position;
an alignment top plate fastened to said alignment base plate, having a substantially planar surface, wherein said substantially planar surface is a grooved surface, having a second groove with a substantially rectangular shape, having a portion of lesser dimension than the diameter of said bared portion of one of said optical waveguide fibers, configured to restrain said plurality of optical waveguide fibers in said predetermined position.

7. The optical waveguide alignment device of claim 6, wherein said first groove includes:
a first narrow portion lesser in width than the diameter of said bared portion of one of said optical waveguide fibers;
a second narrow portion lesser in width than the diameter of said bared portion of one of said optical waveguide fibers; and
a intermediate portion disposed therebetween and greater in width than said first narrow portion and said second narrow portion;
said second groove includes:
a first narrow portion lesser in width than the diameter of said bared portion of one of said optical waveguide fibers;
a second narrow portion lesser in width than the diameter of said bared portion of one of said optical waveguide fibers; and
a intermediate portion disposed therebetween and greater in width than said first narrow portion and said second narrow portion.

8. The optical waveguide alignment device of claim 7, wherein said bared portion of each optical waveguide fiber contacts the reentrant corners of said first and second narrow portions of said first groove of said alignment base plate and said second groove alignment top plate.

9. The optical waveguide alignment device of claim 6, further comprising a connection face, wherein said connection face is substantially planar and transverse to said plurality of optical waveguide fibers, having the light emitting or receiving ends of said bare portion of said plurality of optical waveguide fibers about coplanar with said connection face.

10. The optical waveguide alignment device of claim 9, wherein said connection surface forms an angle with said grooved surface of said alignment base plate and said grooved surface of said alignment top plate.

11. The optical waveguide alignment device of claim 6, wherein said grooves of said alignment base plate are made using photolithography and reactive ion etching, wherein said grooves of said alignment top plate are made using photolithography and reactive ion etching.

12. The optical waveguide alignment device of claim 6, wherein said alignment top plate is fastened to said alignment base plate by an adhesive.

13. The optical waveguide alignment device of claim 6, wherein said alignment base plate is made from silica; and said alignment top plate is made from silica.

14. The optical waveguide alignment device of claim 13, wherein said adhesive is an Ultra-Violet curable adhesive.

15. The optical waveguide alignment device of claim 6, wherein said alignment base plate is made from silicon; and said alignment top plate is made from silicon.

16. The optical waveguide alignment device of claim 15, wherein said adhesive is an thermally curable adhesive.

17. A connector for optical signal transmission systems for use with a plurality of optical waveguide fibers, each fiber including a bare portion and a covered portion, configured to transmit an optical signal therethrough, said bare portion having an terminal end configured for emitting or receiving light, the connector for optical signal transmission systems comprising:
an alignment base plate having:
a connection face; and
a grooved surface adjacent to said connection face and forming an angle with said connection face, said grooved surface including:
a plurality of coplanar grooves; each groove including:
a proximate portion adjacent to said connecting face having a substantially rectangular cross section lesser in width than the diameter of the bare portion of said optical fiber;
a distal portion having a substantially rectangular cross section lesser in width than the diameter of the bare portion of said optical fiber;
an intermediate portion having a substantially rectangular cross section therebetween; having a width greater than the widths of said proximate and said distal portions;
an alignment top plate attached to said alignment base plate, having:
a connection face; and
a grooved surface adjacent to said connection face and forming an angle with said connection face, said grooved surface including:
a plurality of coplanar grooves; each groove including:
a proximate portion adjacent to said connecting face having a substantially rectangular cross section lesser in width than the diameter of the bare portion of said optical fiber;
a distal portion having a substantially rectangular cross section lesser in width than the diameter of the bare portion of said optical fiber; and
an intermediate portion having a substantially rectangular cross section therebetween; having a width greater than the widths of said proximate and said distal portions;
wherein, said alignment base plate and said alignment top plate support and restrain each of said plurality of optical waveguide fibers in a predetermined position, said connection face of said alignment base plate and said connection face of said alignment top plate are positioned to form a substantially planar surface, said substantially planar surface configured to facilitate use of said plurality of optical fibers as a provider of input signals to or a receiver of output signals from a optical device.

18. The connector of claim 17 wherein, said alignment base plate is made from silica, said alignment top plate is made from silica and said alignment base plate is attached to said alignment top plate with an adhesive curable by irradiation with Ultra-Violet light.

19. The connector of claim 17 wherein, said alignment base plate is made from silicon, said alignment top plate is made from silicon and said alignment base plate is attached to said alignment top plate with a thermally curable adhesive.

20. A method for making a connector for optical signal transmission systems comprising the steps of:
cleaning a silica substrate block;
depositing a silicon mask layer on said substrate block;
depositing a resin mask layer;
curing said resin mask layer;
etching said mask layer;
etching said substrate block;
removing said silicon mask;
coating said etched silica substrate block with resin;
severing said etched silica substrate block into a plurality of fiber guide blocks;
removing said resin;
selecting two complimentary fiber guide blocks;
sandwiching a plurality of optical fibers between said selected fiber guide blocks;
attaching said plurality of optical fibers and said two fiber guide blocks, one to another, forming an optical array; and
forming a surface configured to transmit from and receive light into said plurality of optical fibers.

21. A method for manufacturing optical waveguide arrays, comprising:
forming a body having a planar face;
forming a plurality of grooves in said planar face;
severing said body to form at least a first and a second grooved support;
inserting a plurality of optical waveguides into said plurality of grooves of said first grooved support;
placing said second grooved support on said first grooved support, wherein said plurality of optical waveguides are aligned with said plurality of grooves of said second grooved support;
attaching said first grooved support, said second grooved support and said plurality of optical waveguides one to another to form an optical waveguide block; and
severing a portion from said optical waveguide block, wherein said severing is transverse to said plurality of optical waveguides and produces at least one surface, wherein at least one terminus of each of said plurality of optical waveguides is about coincident with said at least one surface.

22. The method of claim 21 wherein, said at least one surface, transverse to said grooves, is at an angle with respected to said planar surfaces of said first and second grooved supports.

23. The method of claim 21 wherein, said body is of silica.

24. The method of claim 21 wherein, said plurality of grooves are formed by photolithography.

25. The method of claim 21 wherein, said plurality of grooves are U-shaped in cross section.
